**Europäisches Patentamt**

**European Patent Office**

**Office européen des brevets**

(19)

(11) Veröffentlichungsnummer: **0 265 675 B1**

## EUROPÄISCHE PATENTSCHRIFT

(12)

(45) Veröffentlichungstag der Patentschrift: **13.11.91**

(51) Int. Cl.⁵: **B60G 7/02**

(21) Anmeldenummer: **87114081.0**

(22) Anmeldetag: **26.09.87**

(54) **Baueinheit aus einem Hilfsrahmen und schwenkbar daran angelenkten Radführungslenkern.**

(30) Priorität: **04.10.86 DE 3633911**

(43) Veröffentlichungstag der Anmeldung:
**04.05.88 Patentblatt 88/18**

(45) Bekanntmachung des Hinweises auf die
Patenterteilung:
**13.11.91 Patentblatt 91/46**

(84) Benannte Vertragsstaaten:
**DE ES FR IT**

(56) Entgegenhaltungen:
**DE-A- 2 536 060**
**DE-A- 3 546 289**
**FR-A- 2 242 260**

(73) Patentinhaber: **Volkswagen AG**

**W-3180 Wolfsburg 1(DE)**

(72) Erfinder: **Kerst, Manfred**
**Lindenweg 2**
**W-3180 Wolfsburg 15(DE)**
Erfinder: **Winter, Ingo, Dipl.-Ing.**
**Weidenweg 24**
**W-3172 Isenbüttel(DE)**
Erfinder: **Engel, Michael, Dipl.-Ing.**
**Schwerinerweg 3**
**W-3174 Meine(DE)**

**Beschreibung**

Die Erfindung betrifft eine Baueinheit der im Oberbegriff des Patentanspruchs 1 genannten Art, wie sie beispielsweise aus der DE-A-25 36 060 bekannt ist.

Im Automobilbau ist es seit langem üblich, besondere Hilfsrahmen oder Fahrschemel am Fahrzeugaufbau zu befestigen, um dadurch an sonst nicht geeigneten Stellen des Fahrzeuges Lager- und sonstige Stützpunkte insbesondere für die Anlenkung der Radführungslenker - oder auch für die Befestigung des Motors -zu schaffen. Je nach Ausgestaltung der Hilfsrahmen werden diese dabei mittels zweier, dreier oder auch mehr Schraubverbindungen am Fahrzeugaufbau befestigt. Für die an ihnen schwenkbar angelenkten Radführungslenker in Form von Quer-, Längs- oder Schräglenkern sind am Hilfsrahmen im Abstand zueinander angeordnete Anlenklager mit Lagerwangen zur Aufnahme von an den Radführungslenkern befestigten Gummimetallagern vorgesehen.

Bei einer bekannten Radaufhängung dieser Art (DE-A-25 36 060) ist jeweils eines der beiden Anlenklager, nämlich das in Fahrtrichtung gesehen hintere Anlenklager mit etwa horizontal ausgerichteten Lagerwangen ausgestattet. Durch die Innenhülse des von diesen Lagerwangen aufgenommenen Gummimetalllagers des Radführungslenkers ist ein etwa vertikal ausgerichteter Lagerbolzen hindurchgeführt, der nicht nur zur Lagerung des Gummimetallagers in diesem Anlenklager, sondern gleichzeitig auch zur Befestigung des Hilfsrahmens am Fahrzeugaufbau dient. Durch diese Maßnahme ist der Aufwand für die Befestigung des Hilfsrahmens am Fahrzeugaufbau im Vergleich zu sonst üblichen Anordnungen spürbar herabgesetzt, weil mindestens zwei der sonst zusätzlich benötigten Befestigungspunkte fortfallen.

Um den Fertigungsaufwand herabzusetzen und den Fertigungsablauf zu optimieren, wird es zunehmend üblich, den Hilfsrahmen und mindestens die beiden Radführungslenker zu einer vormontierten Baueinheit zusammenzufassen und diese während der Endmontage als Ganzes am Fahrzeugaufbau anzuschrauben. Sofern der Schraubbolzen eines der bei den Anlenklager wie bei der oben erwähnten vorbekannten Radaufhängung nicht nur zur Anlenkung des Radführungslenkers, sondern gleichzeitig auch zur Befestigung des Hilfsrahmens am Fahrzeugaufbau dient, ist es bei der Vormontage üblich, den Radführungslenker in diesem Anlenklager für den Transport etc. durch eine Montagehülse, z. B. eine geschlitzte federnde Hülse zu fixieren. Bei der Endmontage wird dann der den Hilfsrahmen am Fahrzeugaufbau befestigende zugehörige Lagerbolzen dieses Anlenklagers durch die Montagehülse hindurchgesteckt und mit dem Fahrzeugaufbau verschraubt.

Bei einer solchen Anordnung kann nicht völlig ausgeschlossen werden, daß sich die eine oder die andere Montagehülse während des Transportes doch löst und damit die Fixierung des Radführungslenkers im Hilfsrahmen verlorengeht oder aber daß die Montagehülse während der Endmontage durch den eingeführten Schraubbolzen etwas herausgedrückt wird, wodurch sich zumindest gelegentlich undefinierte Schraubverbindungen ergeben können.

Der Erfindung liegt daher die Aufgabe zugrunde, eine Baueinheit der im Oberbegriff des Patentanspruchs 1 genannten Art so zu verbessern, daß einerseits die Radführungslenker - ebenfalls ohne den Einsatz der auch der Hilfsrahmenbefestigung dienenden vertikalen Lagerbolzen - bei der Vormontage definiert und unter allen Umständen sicher am Hilfsrahmen fixiert werden und andererseits die Lagerbolzen während der Endmontage zur Befestigung des Hilfsrahmens am Fahrzeugaufbau ohne jede Gefahr für diese Fixierung eingeschoben und verschraubt werden können.

Diese Aufgabe wird erfindungsgemäß durch die Merkmale des Patentanspruchs 1 gelöst.

Durch die erfindungsgemäßen Merkmale können die Radführungslenker vormontiert werden, ohne daß zur Fixierung des Radführungslenkers in dem auch der Befestigung des Hilfsrahmens dienenden Anlenklager zusätzliche Montagehilfsmittel wie Montagehülsen, Hilfsschrauben o. ä. benötigt werden. Neben der Einsparung solcher Montagehilfsmittel ergibt sich auch eine Gewichtseinsparung sowie eine Verkürzung der Montagezeit. Darüberhinaus ergibt sich der wesentliche funktionstechnische Vorteil, daß in diesen Anlenklagern über die axialen Lagerfortsätze der Lagerwangen in Fahrzeuglängsrichtung eine Abstützung der Gummimetallager erfolgt, so daß die z. B. beim Bremsen auftretenden hohen Lagerkräfte nicht mehr nur über die Lagerbolzen abgestützt werden müssen.

Anhand eines in der Zeichnung dargestellten Ausführungsbeispieles wird die Erfindung nachstehend näher erläutert.

In der Zeichnung zeigen in zum Teil geschnittener und zum Teil schematischer Darstellung.

Fig. 1 eine Ansicht auf den Hilfsrahmen mit Radführungslenkern in Fahrzeuglängsrichtung gesehen,

Fig. 2 die gleiche Anordnung in der Draufsicht,

Fig. 3 ein in Fig. 1 mit III beziffertes Detail der Anordnung,

Fig. 4 das gleiche Detail in einer anderen Schnittrichtung,

Fig. 5 die Draufsicht sowie einen Schnitt durch eine der Lagerwangen und

Fig. 6 eine schematische Darstellung der Vormontageschritte.

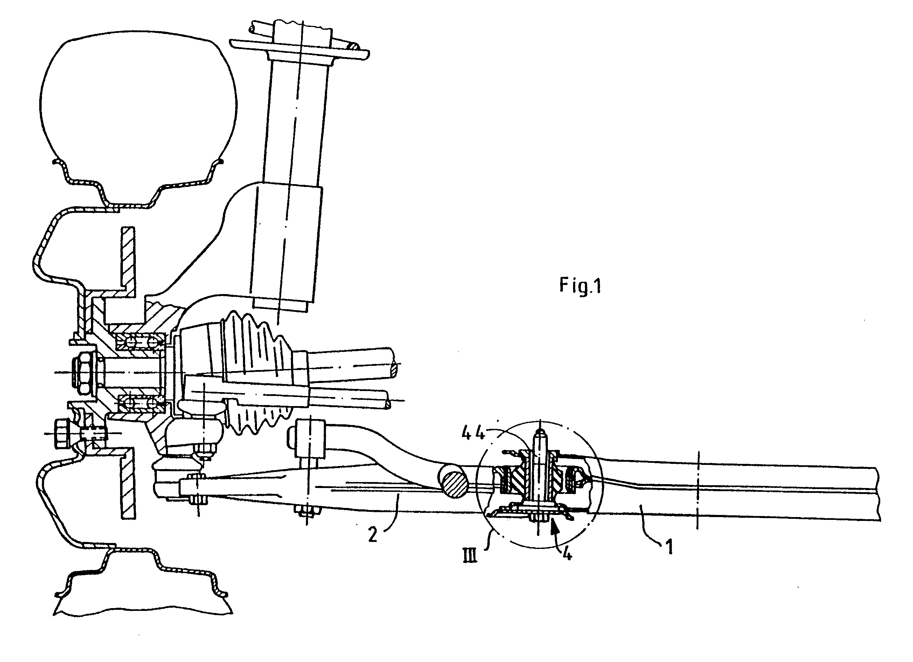

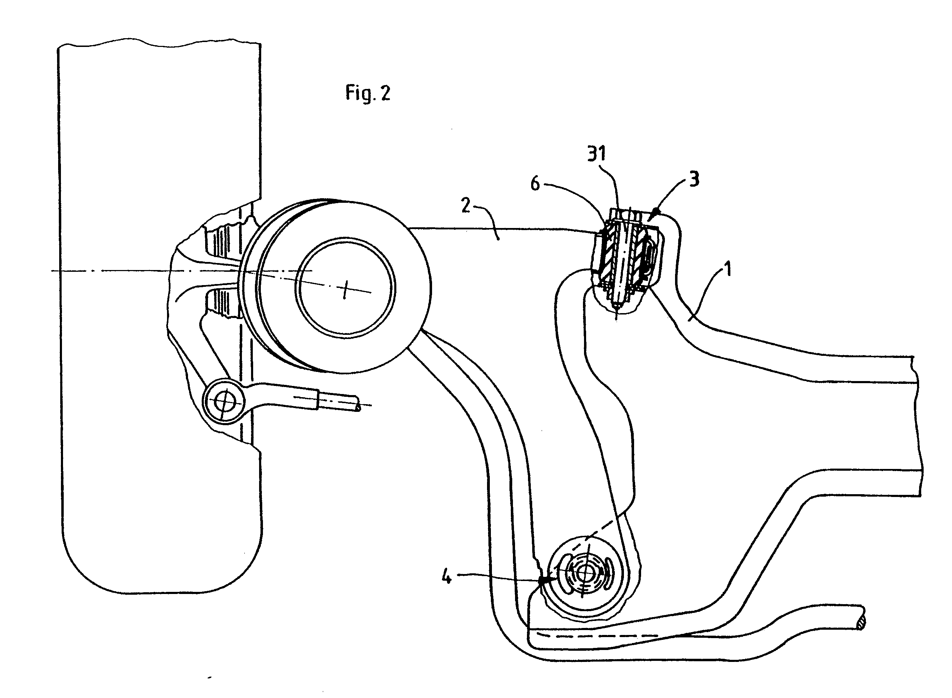

Die in den Figuren 1 und 2 dargestellte Einzelradaufhängung weist einen wie üblich zur Fahrzeuglängsrichtung im wesentlichen symetrischen Hilfsrahmen 1 auf, von dem lediglich der linke Teil dargestellt ist. An ihm sind in zwei im Abstand zueinander angeordneten Anlenklagern 3 und 4 unter Verwendung elastischer Lagerelemente, nämlich von Gummimetallagern 5 und 6 zwei Radführungslenker 2 in Form als Dreiecklenker ausgebildeter Querlenker schwenkbar angelenkt. Die in Fahrtrichtung gesehen vorderen Anlenklager 3 sind wie üblich als Radiallager ausgebildet, deren Lagerachsen mit den zugehörigen Lenkerdrehachsen der Radführungslenker 2 übereinstimmen. Die in Fahrtrichtung gesehen hinteren Anlenklager 4 sind dagegen als vertikal ausgerichtete Lager ausgestaltet, deren vertikale Lagerbolzen 44 nicht nur zur schwenkbaren An lenkung der Radführungslenker 2, sonder n gleichzeitig auch zur Befestigung des Hilfsrahmens 1 am nicht weiter dargestellten Fahrzeugaufbau dienen.

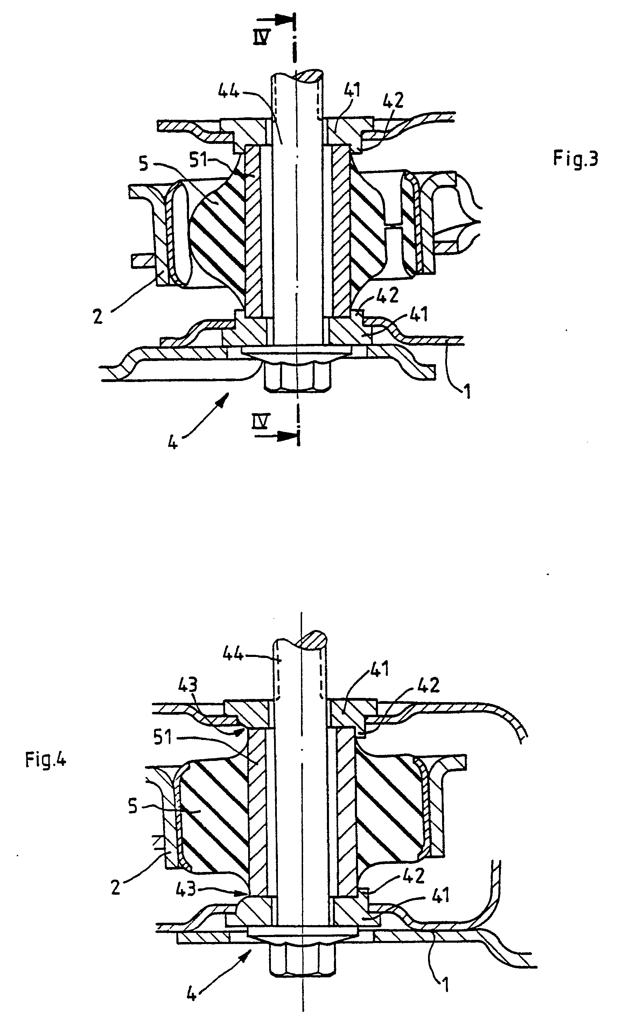

Die Radführungslenker besitzen in deisem Bereich ein Lenkauge, in welches ein in den Figuren 3 und 4 mit 5 beziffertes Gummimetallager eingelassen ist, dessen vom Lagerbolzen 44 durchgriffene metallische Innenhülse mit 51 beziffert ist.

Wie insbesondere die Figuren 3 und 4 erkennen lassen, sind im Hilfsrahmen 1 zur Aufnahme des Gummimetallagers 5 zwei etwa horizontal ausgerichtete Lagerwangen 41 vorgesehen, an denen die Innenhülse 51 stirnseitig anliegt.

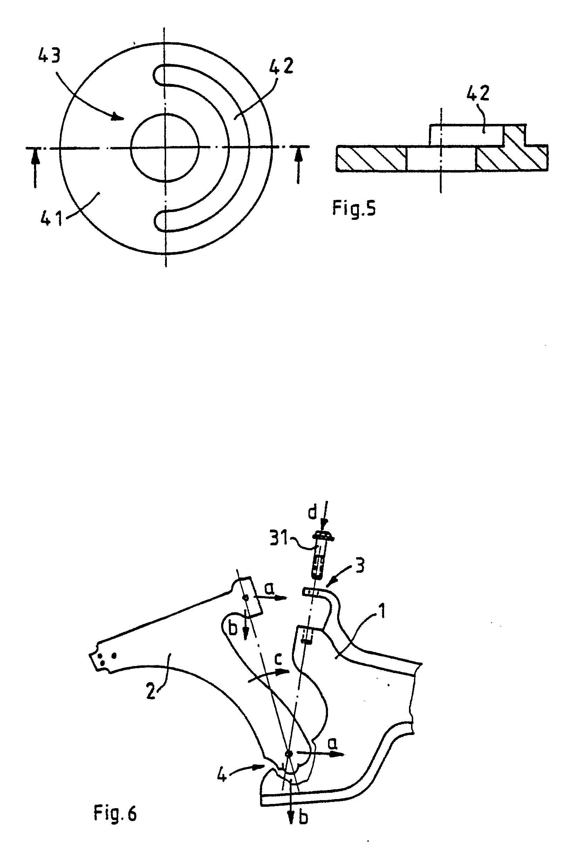

Wie insbesondere auch der schematischen Darstellung der Fig. 5 zu entnehmen ist, besitzen die beiden Lagerwangen 41 jeweils einen in Richtung des von ihnen aufgenommenen Gummimetallagers 5 weisenden axialen Lagerfortsatz 42 mit einer etwa C-oder halbkreisförmigen Kontur. Die beiden Enden der Innenhülse 51 des Gummimetallagers 5 werden entlang eines Teils ihres Umfanges von diesen axialen Lagerfortsätzen 42 kragenförmig umschlossen und damit bezüglich ihrer radialen Ausrichtung fixiert.

Die Lagerwangen 41 sind bezüglich ihrer in Fig. 5 mit 43 bezifferten seitlich offenen Bereiche etwa in Richtung des vorderen Anlenklagers 3 ausgerichtet, wobei die seitlich offenen Bereiche so bemessen sind, daß ihre "Maulweite" zumindest etwas größer als der Außendurchmesser der Innenhülsen 51 ist. Sie sind insbesondere derart bemessen und ausgerichtet, daß eine einwandfreie schwenkbare Anlenkung des Radführungslenkers am Hilfsrahmen 1 jeweils nur in der Weise herstellbar ist, daß der Radführungslenker zunächst mit der Innenhülse 51 des Gummimetallagers 5 durch die seitlich offenen Bereiche 43 in die axialen Lagerfortsätze 42 eingeschoben und erst danach - nach einer Schwenkbewegung um die axialen Lagerfortsätze 42 - im zweiten, vorderen Anlenklager 3 durch den Lagerbolzen 31 angeschraubt werden kann. In Fig. 6 ist die diesbezügliche Montagereihenfolge während der Vormontage schematisch dargestellt. Man erkennt, daß der Radführungslenker 2 zunächst soweit in Richtung des Pfeiles a zum Hilfsrahmen 1 geführt wird, bis die Innenhülse 51 des Gummimetallagers 5 etwa in Höhe der seitlich offenen Bereiche 43 des hinteren Anlenklagers 4 des Hilfsrahmens 1 liegt. In einer anschließenden Schiebebewegung in Richtung des Pfeiles b wird die Innenhülse 51 sodann durch die seitlich offenen Bereiche 53 in die axialen Fortsätze 42 eingeführt, bis sie an diesen zur Anlage kommt. Danach wird der Radführungslenker 2 - mit der durch die axialen Fortsätze 42 lagefixierten Innenhülse 51 als Drehachse - in Richtung des Pfeiles c soweit geschwenkt, bis sein vorderes Gummimetalllager 6 in das vordere Anlenklager 3 des Hilfsrahmens 1 eingeführt ist. Anschließend wird das Gummimetallager 6 durch den Lagerbolzen 31 im vorderen Anlenklager 3 verschraubt.

Man erkennt, daß der Bewegungsablauf sich aus einfachen translatorischen und Drehbewegungen zusammensetzt, so daß auch die Vormontage der Baueinheit vergleichsweise einfach automatisiert durchgeführt werden kann.

Durch die gewählte räumliche Ausrichtung der seitlich offenen Bereiche 43 der axialen Fortsätze 42 des hinteren Anlenklagers 4 ist der Radführungslenker 2 auch im hinteren Anlenklager trotz noch fehlender Verschraubung transportsicher und für die spätere Endmontage lagedefiniert fixiert. Bei der Endmontage können somit zur Verschraubung des Hilfsrahmens am Fahrzeugaufbau die vertikalen Lagerbolzen 44 ohne weiteres, d. h. ohne jegliche Behinderung durch eine Montagehülse o. ä. bzw. ohne daß zuvor irgendein Fixierungselement entfernt werden müßte, durch das Anlenklager 4 hindurchgeführt werden.

## Patentansprüche

1. Baueinheit aus einem lösbar am Fahrzeugaufbau eines Kraftfahrzeugs anschraubbaren Hilfsrahmen (1) und aus an diesem jeweils in zwei im Abstand zueinander angeordneten Anlenklagern (3, 4) schwenkbar angelenkten Radführungslenkern (2), wobei jeweils eines der beiden Anlenklager zwei zumindest annähernd horizontale Lagerwangen (41) zur Aufnahme eines am Radführungslenker (2) befestigten Gummimetallagers (5) enthält, durch dessen Innenhülse (51) ein etwa vertikaler Lagerbolzen (44) hindurchführbar ist, der gleichzeitig auch zur Befestigung des Hilfsrahmens (1) am Fahrzeugaufbau dient,
dadurch gekennzeichnet, daß die Lagerwangen (41) einander Zugekehrte axiale Lagerfortsätze (42) mit einer etwa C- oder halbkreisförmigen Kontur tragen, von denen die beiden Enden der Innenhülse (51) entlang eines Teils ihres Umfangs kragenförmig umschlossen sind, daß der seitlich offene Bereich (43) der axialen Lagerfortsätze (42) etwa in Richtung des zweiten Anlenklagers (3) ausgerichtet ist, und daß die Maulweite des offenen Bereichs (43) zumindest etwas größer ist als der Außendurchmesser der von den Lagerfortsätzen (42) teilumschlossenen Innenhülse (51).

2. Baueinheit nach Anspruch 1, dadurch gekennzeichnet, daß die Radführungslenker (2) mit dem Hilfsrahmen (1) vor dessen Befestigung am Fahrzeugaufbau jeweils nur durch die Lagerbolzen (31) der zweiten Anlenklager (3) verschraubt sind, während sie in den Anlenklagern (4) mit horizontalen Lagerwangen (41) ausschließlich über die von den axialen Lagerfortsätzen (42) kragenförmig umschlossenen Innenhülsen (51) ihrer Gummimetallager (5) fixiert sind.

## Claims

1. Constructional unit comprising a subframe (1), which can be detachably screwed to the body of a motor vehicle, and wheel guide arms (2) which are pivotally articulated thereto each in two hinge bearings (3, 4) disposed at a distance from one another, wherein one of the two hinge bearings contains two substantially horizontal bearing side members (41) for holding a rubber-metal bearing (5), which is secured to the wheel guide arm (2), an approximately vertical bearing pin (44) being insertable through the inner sleeve (51) of the rubber-metal bearing, and simultaneously acting to secure the subframe (1) to the vehicle body, characterised in that the bearing side members (41) carry axial bearing extensions (42), which face one another and have an approximately C-shaped or semicircular contour, the two ends of the inner sleeve (51) being embraced by them along a part of their periphery in the manner of a collar, the laterally open region (43) of the axial bearing extensions (42) are aligned approximately in the direction of the second hinge bearing (3), and the throat width of the open region (43) is at least somewhat larger than the outer diameter of the inner sleeve (51), which is partly embraced by the bearing extensions (42).

2. Constructional unit according to claim 1, characterised in that the wheel guide arms (2) are each screwed to the subframe (1) prior to the latter being secured to the vehicle body by the bearing pins (31) of the second hinge bearing (3) only, while in the hinge bearings (4) with horizontal bearing side members (41) they are fixed exclusively by way of the inner sleeves (51), which are embraced by the axial bearing extensions (42) in the manner of a collar, of their rubber-metal bearings (5).

## Revendications

1. Unité de construction composée d'un faux-châssis (1) pouvant être boulonné de façon amovible sur la carrosserie d'un véhicule, et de bras (2) de commande des roues, articulés de façon pivotante sur ce faux-châssis par l'intermédiaire de deux paliers (3, 4) d'articulation espacés l'un de l'autre, l'un des deux paliers d'articulation possédant deux coupelles (41) de palier orientées au moins approximativement dans le sens horizontal et destinées à recevoir un coussinet métallo-caoutchouc (5) fixé sur le bras (2) de commande de roue, un boulon (44) de palier, orienté à peu près verticalement et servant en même temps à la fixation du faux-châssis (1) sur la carrosserie du véhicule, pouvant être guidé à travers la douille intérieure (51) du coussinet, caractérisée par le fait que les coupelles (41) de palier possèdent des extensions axiales (42) de palier, orientées face à face, qui ont un contour approchant une forme de C ou semi-circulaire, et qui encastrent, comme une collerette, les deux extrémités de la douille intérieure (51) sur une partie de sa circonférence, et par le fait que la partie latéralement ouverte (43) des extensions axiales (42) est orientée approximativement dans le sens du deuxième palier (3) d'articulation, et que l'ouverture de la partie ouverte (43) est au moins légèrement plus grande que le diamètre extérieur de la douille intérieure (51) partiellement encastrée dans les extensions axiales (42) de palier.

2. Unité de construction selon la revendication 1, caractérisée par le fait que les bras (2) de commande des roues sont boulonnés sur le faux-châssis (1), avant la fixation de ce dernier sur la carrosserie du véhicule, seulement par l'intermédiaire des boulons (31) de palier du deuxième palier (3) d'articulation, alors qu'ils sont maintenus en position dans les paliers (4) d'articulation ayant des coupelles horizontales (41) de palier uniquement par l'intermédiaire des douilles intérieures (51) de leurs coussinets métallo-caoutchouc (5), qui sont encastrées, comme dans une collerette, dans les extensions axiales (42) de palier.

Fig.1

Fig. 2

EP 0 265 675 B1

Fig.3

Fig.4

Fig.5

Fig. 6